# EUROPÄISCHE PATENTSCHRIFT

(11) **EP 1 415 147 B1**
(45) Veröffentlichungstag und Bekanntmachung des Hinweises auf die Patenterteilung: **09.11.2005**
(21) Anmeldenummer: 02762306.5
(22) Anmeldetag: 27.06.2002
(51) Int. Cl.: G01N 29/26

(54) **VERFAHREN UND VORRICHTUNG ZUR ZERSTÖRUNGSFREIEN PRÜFUNG ODER ZUR ERFASSUNG VON MESSDATEN VON SCHEIBENFÖRMIGEN ODER RINGFÖRMIGEN PRÜFLINGEN**
METHOD AND DEVICE FOR CONDUCTING NONDESTRUCTIVE TESTING OF OR FOR RECORDING MEASUREMENT DATA FROM DISCOIDAL OR ANNULAR TEST OBJECTS
PROCEDE ET DISPOSITIF PERMETTANT DE REALISER UN ESSAI NON DESTRUCTIF OU UN ENREGISTREMENT DE DONNEES DE MESURE SUR DES ECHANTILLONS DISCOIDAUX OU ANNULAIRES

(30) Priorität: 26.07.2001 DE 10135399
(43) Veröffentlichungstag der Anmeldung: 06.05.2004
(73) Patentinhaber: Fraunhofer-Gesellschaft zur Förderung der angewandten Forschung e.V., 80636 München (DE)
(72) Erfinder: BARTSCH, Thomas, 71263 Weil der Stadt (DE); MONTNACHER, Joachim, 70771 Leinfelden-Echterdingen (DE); WALTE, Friedhelm, 66453 Gersheim (DE); POHL, Dirk, 47229 Duisburg (DE); KLOOS, Ralf, 72535 Heroldstatt (DE); WEGENER, Andreas, 70193 Stuttgart (DE); HUPFER, Torsten, 70569 Stuttgart (DE)
(74) Vertreter: Maser, Jochen
(86) Internationale Anmeldenummer: PCT/EP2002/007099
(87) Internationale Veröffentlichungsnummer: WO 2003/010532

(56) Entgegenhaltungen:
- DE-A- 19 925 394
- US-A- 3 596 503
- US-A- 5 864 065

## Beschreibung

Die Erfindung liegt auf dem Gebiet der zerstörungsfreien Werkstoffprüfung und der Erfassung von Meßdaten von scheibenförmigen oder ringförmigen Prüflingen, insbesondere auf dem Gebiet der Sicherheitstechnik für Eisenbahnen.

Die Sicherheitsanforderungen im Eisenbahnverkehr sind stetig wachsend. Ebenso steigen die Anforderungen an die Prüfung von Eisenbahnrädern und Radreifen. Deshalb werden Volumenprüfungen von Rädern und Radreifen mittels Ultraschall angewendet. Durch diese Prüfung soll ausgeschlossen werden; daß Räder und Radreifen in Schienenfahrzeugen eingesetzt werden, welche Materialinhomogenitäten wie Risse, Einschlüsse oder dergleichen, aufweisen, um daraus resultierende Folgeschäden zu vermeiden.

Aus der US-PS 5,864,065 ist eine Prüfanlage für Radreifen bekannt geworden, bei welcher eine Lauffläche und ein Radkranz eines Radreifens durch eine Ultraschallmessung geprüft werden. Ein Prüfling wird auf zwei zueinander beabstandete und in einer Ebene angeordnete Aufnahmerollen aufgesetzt, wobei der Spurkranz des Rades in Vertiefungen der Laufrollen eingreift und das Rad führt. Senkrecht von oben wird eine dritte Laufrolle auf den Prüfling zugeführt, um den Prüfling in einer senkrechten Position anzuordnen. Während der Drehung des Prüflings wird mit Sensoren die Ultraschallmessung durchgeführt. Der den Radkranz prüfende Sensor ist fest angeordnet. Der die Lauffläche prüfende Sensor ist über einen Aufnahmearm mit einem X-Y-Tisch verbunden. Die unteren Aufnahmerollen sind fest zueinander beabstandet, wodurch bei der Prüfung von Prüflingen mit unterschiedlichem Durchmesser der Abstand der Lauffläche zu dem der Lauffläche zugeordneten Sensor unterschiedlich ist. Dies wirkt sich auch nachteilig auf die Messung des dem Spurkranz zugeordneten Sensors aus. Darüber hinaus ist ein schnelles Be- und Entladen der Anlage mit einem Prüfling zeitaufwendig, da nach dem Greifen des Radreifens erst eine Aufwärtsbewegung der oberen Laufrolle erfolgen muß, um den Prüfling zu entfernen. Bei der Beladung ist der Radreifen in einer definierten Position so lange zu fixieren, bis die obere Laufrolle abgesenkt ist und an dem Radreifen angreift. Die zu prüfenden Räder weisen beispielsweise ein Gewicht von 300 bis zu 1.250 kg auf. Des weiteren ist erforderlich, daß bei der Änderung des Durchmessers des Prüflings eine neue Grundeinstellung der Sensoren erforderlich ist, um eine exakte Messung durchführen zu können. Dadurch erhöhen sich die Rüstzeiten einer derartigen Anlage.

Der Erfindung liegt die Aufgabe zugrunde, ein Verfahren anzugeben, mit dem eine zerstörungsfreie Prüfung oder Erfassung geometrischer Maße eines scheiben- oder ringförmigen Prüflings, insbesondere von Rädern oder Radreifen für Schienenfahrzeuge, unabhängig des Durchmessers der Prüflinge ermöglicht wird. Des weiteren sollen ein hoher Automatisierungsgrad und kurze Rüstzeiten erzielt werden. Hierzu soll auch eine Vorrichtung zur Durchführung des Verfahrens angegeben werden.

Diese Aufgabe wird erfindungsgemäß durch die Merkmale des Anspruchs 1 gelöst. Durch dieses Verfahren können die Taktzeiten pro Prüfling erheblich reduziert werden. Durch das Heranfahren oder Heranschwenken zumindest einer Laufrolle an die Lauffläche des Prüflings wird ohne Umrüsten bei unterschiedlichen Durchmessern der Prüflinge eine exakte Positionierung der Sensoren ermöglicht. Dadurch können auch im Durchmesser unterschiedliche Prüflinge nacheinander geprüft werden, ohne daß Ausfallzeiten aufgrund von Umrüstarbeiten gegeben sind. Durch die exakte Positionierung der Prüfsensoren unabhängig des Durchmessers der scheibenförmigen Prüflinge kann sowohl eine zerstörungsfreie Materialprüfung, wie beispielsweise eine Ultraschallprüfung, für einen Radkranz als auch Radscheibe und Radnabe eines Eisenbahnrades oder eines Radreifens für Schienenfahrzeuge ermöglicht sein. Des weiteren können die Sensoren zur Geometrievermessung der scheibenförmigen Prüflinge oder weitere automatisierbare Anwendungsfälle eingesetzt werden, welche eine exakte Positionierung von Sensoren zum Prüfling erfordern. Nach einer bevorzugten Ausgestaltung des Verfahrens ist vorgesehen, daß die Drehung einer angetriebenen Aufnahmerolle, welche den Prüfling aufnimmt und in Drehung versetzt, mit der Drehung einer von dem Prüfling getriebenen Aufnahmerolle oder Laufrolle verglichen wird. Dadurch kann ermittelt werden, ob zwischen der angetriebenen Aufnahmerolle und dem Prüfling ein Schlupf gegeben ist. Dies ist für die Durchführung der Prüfung der Messung von Bedeutung, insbesondere für das Verfahren des Sensors entlang der Prüffläche zur vollständigen Kontrolle.

Bevorzugt wird zur Prüfung einer Lauffläche mit wenigstens einem Sensor nach jeder Umdrehung des Prüflings der zumindest eine Sensor um die Spurbreite entlang der Prüffläche versetzt. Dadurch kann innerhalb kurzer Zeit eine vollständige Prüfung der Lauffläche gegeben sein.

Alternativ zu diesem Prüfverfahren ist vorgesehen, daß der zumindest eine Sensor quer zur Lauffläche in Abhängigkeit des Durchmessers des Prüflings und der Rotationsgeschwindigkeit des Prüflings kontinuierlich oder quasi kontinuierlich verfahren wird. Dadurch wird die Prüffläche schraubenlinienförmig überprüft. Vorteilhafterweise wird erst nach einer vollständigen Rotation des Prüflings der Sensor quer zur Lauffläche verfahren. Dabei ist insbesondere vorgesehen, daß die Prüfspuren sich zumindest teilweise überlappen.

Des weiteren ist vorteilhafterweise vorgesehen, daß bei einem Vollrad die Lauffläche und die Stirnfläche beziehungsweise der Radkranz durch an der schwenkbaren Einrichtung angeordnete Sensoren geprüft wird und die Radscheibe und Radnabe durch an einer Aufnahme angeordnete weitere Sensoren während eines Prüfzyklus des Vollrades geprüft wird. Dadurch können in einem Prüfzyklus weitere Bereiche der Prüflinge überprüft werden, ohne daß eine zusätzliche Prüfzeit erforderlich ist.

Die vorrichtungsbezogene Aufgabe wird durch die Merkmale des Anspruchs 7 gelöst. Durch die schwenkbare Einrichtung, welche nach Aufliegen des Prüflings auf den Aufnahmerollen auf den Prüfling zugeschwenkt wird, um mit zumindest einer daran angeordneten Laufrolle an einer Stirnfläche des Prüflings anzugreifen, ist eine exakte Positionierung der Sensoren ermöglicht. Unabhängig des Durchmessers der Prüflinge erfolgt die exakte Positionierung des zumindest einen an der schwenkbaren Einrichtung angeordneten Sensors. Bei Prüflingen mit kleinem Durchmesser ist der Schwenkwinkel der schwenkbaren Einrichtung größer als bei Prüflingen mit großem Durchmesser, um die Laufrolle in Anlage zum Prüfling zu bringen. Eine Umrüstung ist jedoch nicht erforderlich.

Vorteilhafterweise ist vorgesehen, daß die Schwenkachse der schwenkbaren Einrichtung in der Drehachse der Aufnahmerolle ist. Dadurch ist ein vereinfachter Aufbau und Lagerung der schwenkbaren Einrichtung gegeben.

Die schwenkbare Einrichtung wird über zumindest ein Antriebselement, vorzugsweise einen Hubzylinder, betätigt, der an dem Grundgestell angreift. Derartige Hubzylinder sind vorteilhafterweise für die Prüfung im Wasserbad ausgebildet. Derartige Hubzylinder können pneumatisch oder hydraulisch angetrieben sein. Alternativ können auch elektrische Antriebe vorgesehen sein, die die Voraussetzungen für eine Unterwassertechnik erfüllen.

Die schwenkbare Einrichtung nimmt vorzugsweise zumindest einen ersten Sensor auf, der in einen Bereich zwischen der Laufrolle und der Aufnahmerolle vorgesehen ist. Dieser Sensor wird zur Prüfung der Stirnfläche des Prüflings eingesetzt. Der zumindest eine Sensor ist vorteilhafterweise mittig zwischen den zwei Drehachsen der Aufnahmerolle und der Laufrolle vorgesehen. Dadurch kann der Einfluß der unterschiedlichen Durchmesser der Prüflinge aufgrund der Krümmung gering gehalten werden.

An der schwenkbaren Einrichtung kann vorzugsweise zumindest ein weiterer Sensor vorgesehen sein, welcher eine Scheibenfläche des Prüflings beziehungsweise den Radkranz der Räder prüft. Auch dieser zumindest eine Sensor ist voreinstellbar, so daß nach dem Anliegen der Laufrolle der schwenkbaren Einrichtung an den Prüfling eine Positionierung von wenigstens zwei Sensoren an zwei zu prüfenden Flächen in der voreingestellten Position gegeben ist.

Die an der schwenkbaren Einrichtung angeordneten wenigstens zwei Sensoren sind bevorzugt jeweils über einen an der Einrichtung angeordneten Stelleinrichtung verfahrbar. Der Verfahrweg ist individuell anpaßbar.

Vorteilhafterweise ist vorgesehen, daß die Laufrolle der schwenkbaren Einrichtung mit einem einstellbaren Anpreßdruck über eine Druckbegrenzereinheit an der Lauffläche des Prüflings anliegt. Dadurch ist sichergestellt, daß einerseits ein Anliegen der Laufrolle an der Stirnfläche des Prüflings gegeben ist. Andererseits wird sichergestellt, daß die links und rechts des Prüflings angeordnete Laufrolle bei leichten scheibenförmigen Prüflingen ein Abheben von den Aufnahmerollen verhindert.

Die Druckbegrenzereinheit weist vorteilhafterweise einen gegen einen Kraftspeicher arbeitenden Hebelarm auf, dessen Schwenkbewegung durch Sensoren überwacht werden. Dadurch ist ermöglicht, daß bei Anliegen der Laufrolle an der Stirnfläche des Prüflings der Hebelarm gegen den vorzugsweise als Druckfeder ausgebildeten Kraftspeicher arbeitet. Das Überschreiten eines Druckpunktes oder eines Schwenkwinkels wird von einem Sensor erkannt, der die Stellantriebe abschaltet.

Zum schnellen Entladen ist vorteilhafterweise vorgesehen, daß nach dem Greifen des Prüflings über eine Greifvorrichtung eine obere Stützrolle mittels eines schwenkbaren Armes aus einem Arbeitsbereich herausgeschwenkt wird. Dadurch ist der Bereich für die Be- und Entladung der Vorrichtung einfacher zugänglich. Das schnelle Beladen wird dadurch erzielt, daß während oder nach der Positionierung des Prüflings auf den Aufnahmerollen die Stützrolle in eine Arbeitsposition übergeführt wird und der Prüfling durch eine leichte Kippbewegung daran anliegt und in seiner Prüfposition angeordnet ist.

Des weiteren ist erfindungsgemäß vorgesehen, daß die obere Stützrolle in einem gegenüber dem vertikal geneigten Winkel vorgesehen ist. Dadurch ist der Prüfling in einer Schräglage in der Prüfposition angeordnet. Durch die auf einer Ebene am Grundgestell angeordneten Aufnahmerollen und einer oberen Stützrolle wird des weiteren eine Dreipunktlagerung erzielt, wodurch eine sichere und drehbare Aufnahme des Prüflings gegeben ist. Die an einem Tragarm angeordnete Stützrolle ist vorteilhafterweise in der Höhe einstellbar, so daß unabhängig des Prüflingsdurchmessers eine sichere Dreipunktlagerung in einer Schräglage gegeben ist. Gleichzeitig kann eine zumindest abschnittsweise Anlagefläche des Prüflings in der Schräglage gegeben sein.

Weitere vorteilhafte Ausgestaltungen der Erfindung sind in den weiteren Ansprüchen angegeben.

Ein bevorzugtes Ausführungsbeispiel der erfindungsgemäßen Vorrichtung zur Durchführung des erfindungsgemäßen Verfahrens ist in der nachfolgenden Beschreibung, den Ansprüchen und Zeichnungen angegeben. Es zeigen:
- Figur 1: eine Seitenansicht eines Eisenbahnrades,
- Figur 2: einen Querschnitt eines Eisenbahnrades entlang der Linie I-I in Figur 1,
- Figur 3: eine schematische Vorderansicht der erfindungsgemäßen Vorrichtung,
- Figur 4: eine perspektivische Ansicht der erfindungsgemäßen Vorrichtung ohne Wassertechnik,
- Figur 5: eine schematische Seitenansicht der Vorrichtung,
- Figur 6: eine Draufsicht auf die Vorrichtung ohne Prüfling,
- Figur 7: eine perspektivische Ansicht eines linken Sensorträgers einer schwenkbaren Einrichtung,
- Figur 8: eine perspektivische Ansicht eines rechten Sensorträgers der schwenkbaren Einrichtung,
- Figur 9: eine vergrößerte Seitenansicht der schwenkbaren Einrichtung in einer Arbeitsposition,
- Figur 10: eine schematische Vorderansicht von im Durchmesser unterschiedlichen Prüflingen, die auf Aufnahmerollen aufliegen,
- Figur 11: eine perspektivische Ansicht eines Scheiben- und Nabensensorträgers und
- Figur 12: eine Seitenansicht von zu einem Prüfling angeordneten Scheiben- und Nabensensorträgern.

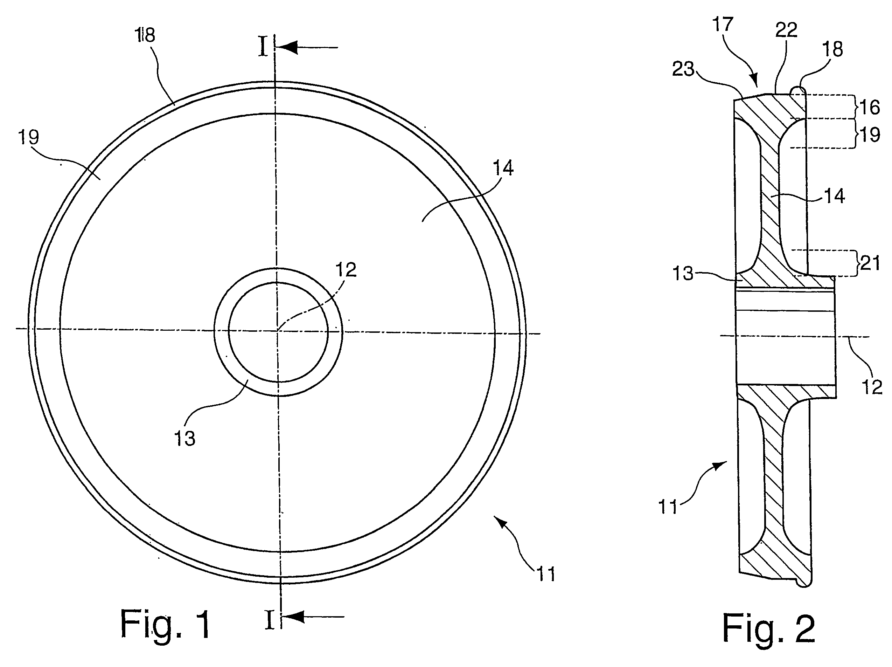

Figur 1 und Figur 2 in einer Querschnittsdarstellung entlang der Linie I-I zeigen ein Eisenbahnrad als Prüfling 11, welches als Monoblockrad ausgebildet ist. Alternativ hierzu sind auch Eisenbahnräder vorgesehen, welche einen aufgeschrumpften Radreifen aufweisen. Ebenso können ringförmige Prüflinge vorgesehen sein. Das Eisenbahnrad 11 rotiert um eine Rotationsachse 12. Das Eisenbahnrad 11 umfaßt eine Radnabe 13, eine Radscheibe 14, einen Radkranz 16 mit einer Lauffläche 17 sowie einen Spurkranz 18. Im Bereich der Radscheibe 14 ist das Eisenbahnrad 11 weniger breit als im Bereich der Radnabe 13 und des Radkranzes 16, so daß Übergangszonen 19, 21 mit veränderlicher Radbreite gebildet sind. Die Lauffläche 17 weist bei dieser Ausführungsform einen horizontalen Abschnitt 22 und einen dem gegenüber geneigten Abschnitt 23 auf. Der Abschnitt 23 ist um wenige Winkelgrade geneigt. Bei einer alternativen Ausführungsform kann vorgesehen sein, daß die Lauffläche 17 ausschließlich aus einem horizontalen Abschnitt 22 ausgebildet ist.

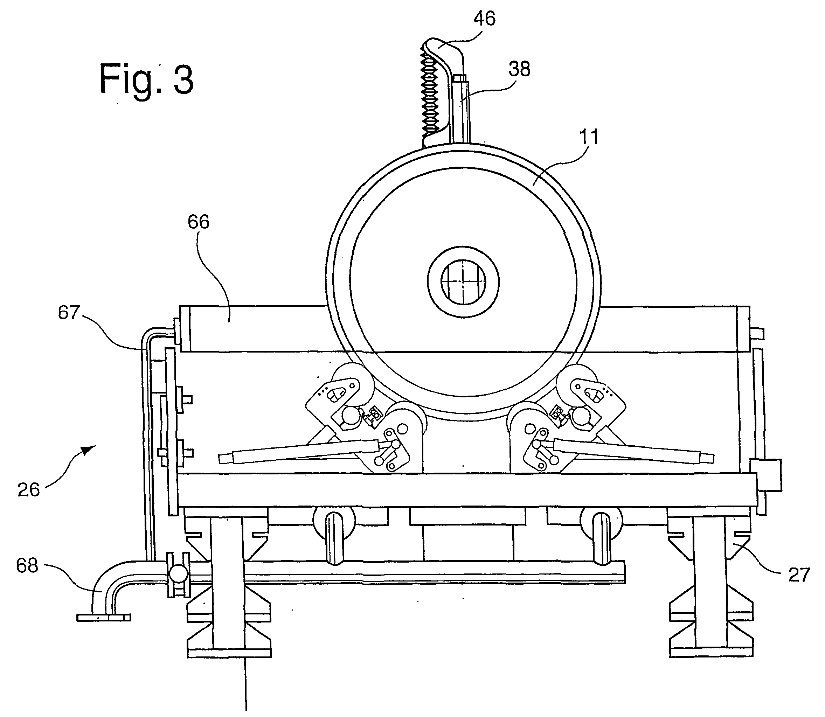

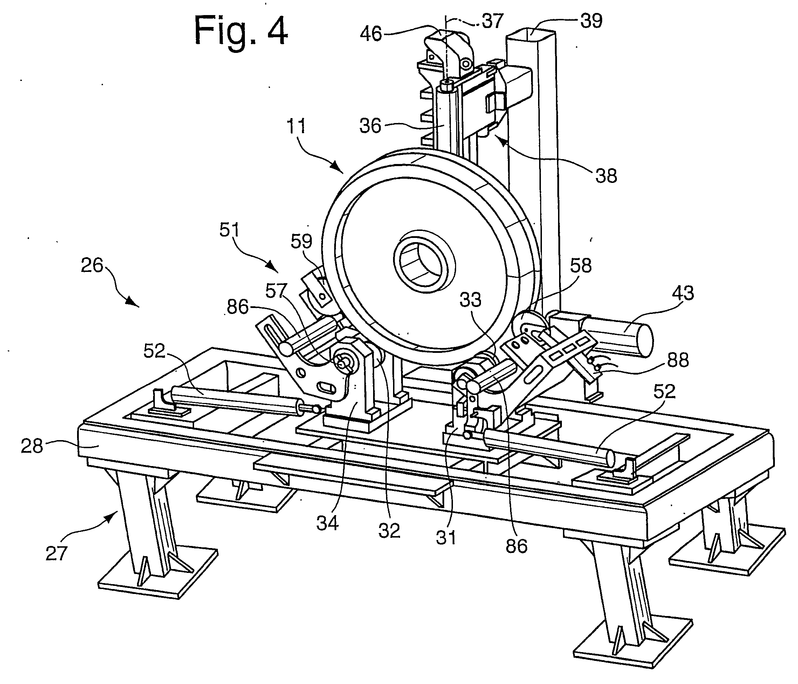

In Figur 3 ist eine Vorrichtung 26 zur zerstörungsfreien Prüfung von Eisenbahnrädern 11 dargestellt. Diese Vorrichtung 26 ermöglicht eine Volumenprüfung von Eisenbahnrädern 11 und Radreifen mittels Ultraschall in Tauchtechnik. In den weiteren Figuren 4, 5 und 6 sind weitere Ansichten der Vorrichtung 26 dargestellt, die im nachfolgenden näher erläutert ist.

Die Vorrichtung 26 weist ein Grundgestell 27 auf, welches einen beispielsweise in einem Winkel von 15° geneigten Rahmen 28 aufnimmt. Auf dem Rahmen 28 ist in einem mittleren Bereich ein erstes und zweites Lager 31, 32 vorgesehen, welches jeweils eine Aufnahmerolle 33, 34 drehbar aufnimmt. Auf diesen Aufnahmerollen 33, 34 stützt sich ein zu prüfendes Eisenbahnrad 11 ab. Die Aufnahmerollen 33 und 34 sind in einer gemeinsamen Ebene angeordnet. Die Aufnahmerollen 33, 34 können auch walzenförmig oder als Rollenpaar ausgebildet sein, welche hintereinander und/oder nebeneinander angeordnete Rollen aufweist. Bei beispielsweise hintereinander angeordneten Laufrollen in einem Doppelwellenträger können eine oder beide Laufrollen angetrieben sein durch einen Riemen-, Zahnritzel- oder Reifradantrieb oder dergleichen. Oberhalb der Aufnahmerollen 33, 34 ist eine Stützrolle 36 vorgesehen, deren Rotationsachse 37 senkrecht zur Rotationsachse 12 des Eisenbahnrades 11 angeordnet ist. Die Stützrolle 36 wird von einem Schwenkarm 38 aufgenommen, der an einem Tragarm 39 befestigt ist. Der Tragarm 39 ist an dem Rahmen 28 befestigt. Durch die Neigung des Rahmens 28 ist auch die Stützrolle 36 entsprechend geneigt. Dadurch wird eine Schräglage des Eisenbahnrades 11 erzielt. Gleichzeitig ist wenigstens eine Dreipunktlagerung des Eisenbahnrades 11 gegeben, wodurch eine sichere Prüfposition auch während der Rotation des Eisenbahnrades 11 gegeben ist. Zur weiteren Stabilisierung der Prüflage des Eisenbahnrades 11 sind zusätzlich an dem Lager 31, 32 Kegelrollen 41, 42 vorgesehen, welche an dem Radkranz 16 beziehungsweise an der Stirnfläche des Eisenbahnrades 11 angreifen. Die beiden Kegelrollen 41, 42 sind frei drehbar an den Lagern 31, 32 angeordnet. Des weiteren kann vorgesehen sein, daß den Kegelrollen 41, 42 jeweils zumindest eine weitere Kegelrolle zugeordnet ist, welche vorzugsweise auf unterschiedliche Breiten der Prüflinge 11 einstellbar ist. Die Einstellung kann beispielsweise auch durch eine aktive Zuführung der zweiten oder weiteren Kegelrollen erfolgen, wodurch die Führung des Prüflings verbessert wird.

Die Aufnahmerolle 33 des Lagers 31 wird von einem Motor 43 angetrieben. Dieser Motor 43 ist außerhalb des Rahmens 28 angeordnet und über eine Antriebswelle 44 mit der Aufnahmerolle 33 verbunden. Zusätzlich kann die Kegelrolle 41 über ein Getriebe mit gleicher Umdrehung zur Aufnahmerolle 33 angetrieben sein. Zumindest die angetriebene Aufnahmerolle 33 ist als Reibrolle ausgebildet und weist vorzugsweise eine entsprechende verschleißfeste Oberfläche und Materialauswahl auf.

Die Drehung der Aufnahmerolle 33 wird durch einen Inkrementalgeber 47 erfaßt. Die Drehung der durch das Eisenbahnrad 11 getriebenen Aufnahmerolle 34 wird ebenfalls durch einen weiteren Inkrementalgeber 48 erfaßt und melden die erfaßten Werte an eine Steuerung.

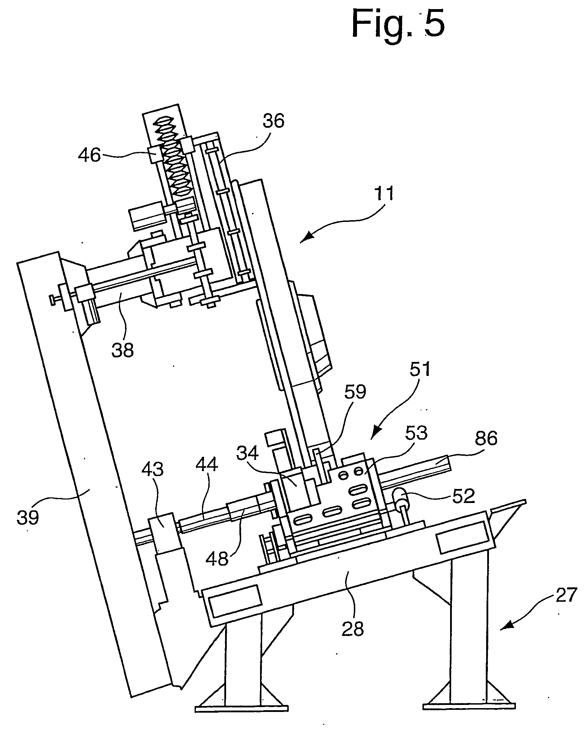

Die Stützrolle 36 ist nicht angetrieben. Diese kann alternativ ebenso als Antrieb für den Prüfling eingesetzt werden. Die Stützrolle 36 ist über ein Hubelement 46 an dem Schwenkarm 38 angeordnet. Dadurch ist die Stützrolle 36 höheneinstellbar, wodurch sichergestellt ist, daß in Abhängigkeit der unterschiedlichen Durchmesser der Eisenbahnräder außerhalb der Radnabe 13 angreift. Der Schwenkarm 38 ist durch einen Hubzylinder aus einer in Figur 5 dargestellten Arbeitsposition um beispielsweise 90° verschwenkbar, wodurch die Zugänglichkeit für das Be- und Entladen der Vorrichtung 26 vergrößert wird. An der Stützrolle 36 sind entlang der Rotationsachse 37 mehrere Sensoren vorgesehen. Über diese Sensoren kann eine automatische Einstellung der Höhenlage gesteuert werden.

Die Lager 31 und 32 nehmen eine schwenkbare Einrichtung 51 auf, welche über Antriebselemente 52 betätigbar ist. Die Antriebselemente 52 sind vorzugsweise als Hubzylinder ausgebildet, die an dem Rahmen 28 befestigt sind. Die schwenkbare Einrichtung 51 weist einen linken und rechten Sensorträger 53 und 54 auf, welche schwenkbar um eine Drehachse 56 der Aufnahmerolle 33 und üm eine Drehachse 57 der Aufnahmerolle 34 schwenkbar gelagert sind. Die Sensorträger 53, 54 weisen ein annähernd U-förmiges Gestell auf, welches jeweils eine Laufrolle 58, 59 aufnimmt. Diese Laufrollen 58, 59 sind in derselben Ebene wie die Aufnahmerollen 33, 34 angeordnet. Die vorzugsweise als Hubzylinder ausgebildeten Antriebselemente 52 stützen sich am Rahmen 28 ab und greifen an einer Druckbegrenzereinheit 91 an dem linken und rechten Sensorträger 53, 54 an. Durch Betätigen der Antriebselemente 52 schwenken die Sensorträger 53, 54 mit der Laufrolle 58, 59 auf die Lauffläche 17 des Eisenbahnrades 11 zu, bis die Laufrolle 58, 59 an der Lauffläche 17 zur Anlage kommt. Dies ist beispielsweise in Figur 3 dargestellt. Die schwenkbare Einrichtung 51 ist nunmehr in einer Arbeitsposition.

Zur Durchführung einer zerstörungsfreien Prüfung mit Ultraschalltauchtechnik ist ein Becken 66 vorgesehen, welches auf dem Rahmen 28 angeordnet ist und die Lager 31, 32, die schwenkbare Einrichtung 51 und deren Antriebselemente 52 umgibt. Das Wasserbecken 66 weist zumindest einen Zulauf 67 sowie zumindest einen Ablauf 68 für das Koppelmedium, beispielsweise Wasser, auf. Des weiteren können ein Wasserfilter sowie ein Skimmer zur Abscheidung von Ölen auf der Wasseroberfläche vorgesehen sein. Des weiteren kann in dem Becken 66 ein Pufferbehälter vorgesehen sein. Die innerhalb des Beckens 66 angeordneten Bauteile, welche mit dem Koppelmedium zur Durchführung der Prüfung mit Ultraschall in Tauchtechnik in Kontakt kommen, sind, durch eine entsprechende Materialauswahl oder Abdichtungen, daran angepaßt. Bei alternativen Prüftechniken, wie bspw. der Kontaktprüfung, können das Becken 66 und die für die Tauchtechnik erforderlichen zusätzlichen Bauteile und Komponenten entfallen.

Die in den Figuren 3 bis 6 dargestellte Vorrichtung 26 wird zur Volumenprüfung von Rädern und Radreifen mittels Ultraschall eingesetzt. Sofern die nachfolgend noch näher beschriebene Scheiben- und Nabenprüfung auch mittels UltraschallTauchtechnik geprüft werden soll, können die Wandflächen des Beckens 66 höher ausgebildet sein oder aufgestockt werden, um die das Eintauchen der Prüfflächen in das Koppelmedium zu ermöglichen. Zur Wartung der Komponenten der Vorrichtung können Öffnungen vorgesehen sein oder einzelne Abschnitte abnehmbar ausgebildet sein. Diese Vorrichtung kann ebenso für eine Geometrievermessung von Rädern und Radreifen eingesetzt werden. Hierzu wird ein Becken 66 nicht benötigt, um die Messung in der Tauchtechnik durchzuführen. An diesen Anwendungsfall angepaßte Sensorenhalterungen können beispielsweise Laser-Triangulations-Sensoren aufnehmen. Auch mechanische Abtaster können integriert werden, die beispielsweise an die Sensorträger angebracht werden, um geometrische Maße der Eisenbahnräder oder Prüflinge zu ermitteln. Auch weitere Anwendungsfälle dieser Vorrichtung sind denkbar, die eine stabile Aufnahme von Prüflingen für eine automatisierbare Handhabung erfordern sowie das Anbringen von Sensoren oder anderer Ausrüstung, deren Positionen zum Prüfling exakt bestimmt werden.

Die Vorrichtung 26 steht zur Bestückung mit einer Handhabungstechnik in Verbindung. Zur Durchführung der Prüfung oder Messung ist eine Steuerung und ein prüftechnischer Computer mit entsprechender Software zur Prüfung und Auswertung vorgesehen, der auch für weitere Anwendungsfälle einsetzbar ist.

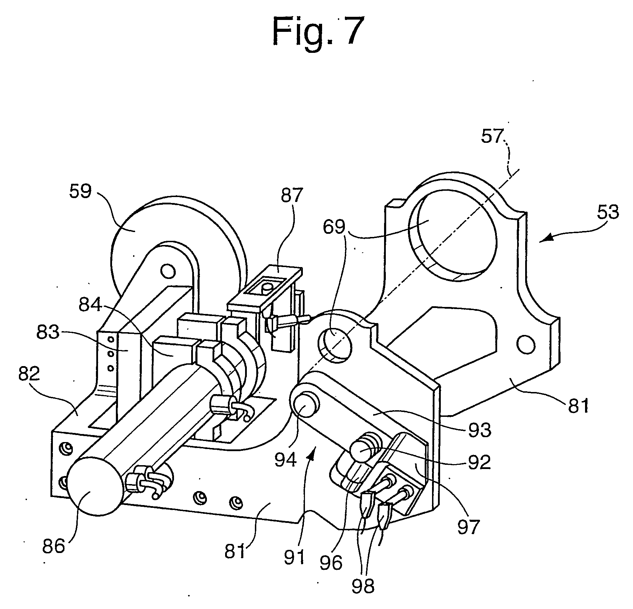

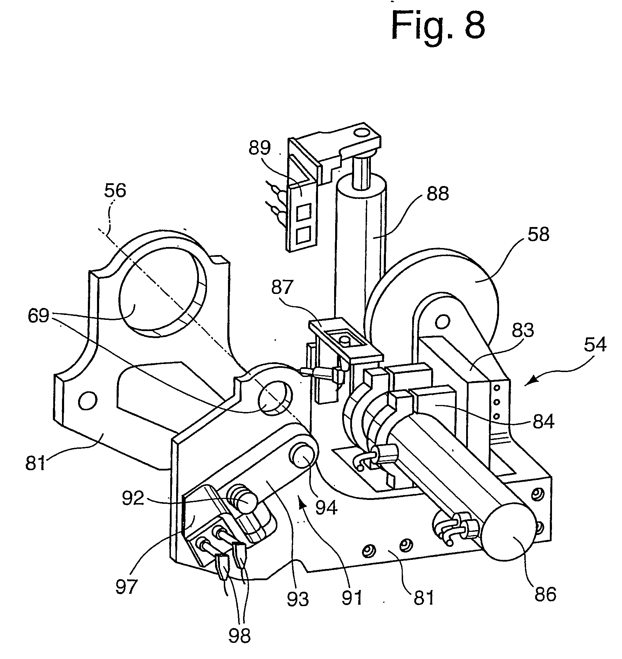

In Figur 7 ist ein linker Sensorträger 53 und in Figur 8 im wesentlichen spiegelbildlich ein rechter Sensorträger 54 dargestellt. Der Sensorträger 53, 54 weist eine Lageröffnung 69 auf, durch welche der Sensorträger 53, 54 schwenkbar am Lager 31, 32 angeordnet ist. Ein linker und rechter Schenkel 81 sind durch eine Strebe 82 zueinander beabstandet und umgreifen das Lager 31, 32. An der Strebe 82 ist eine Aufnahme 83 vorgesehen, welche die Laufrolle 58, 59 trägt. An dieser Aufnahme ist des weiteren ein Halteelement 84 vorgesehen, das zur Fixierung oder als ansteuerbare Linearführung eines Stellantriebes 86 vorgesehen ist. Der Stell-antrieb 86 ist als Hubzylinder oder als ansteuerbare Linearführung ausgebildet und nimmt eine Sensorhalterung 87 auf. Diese ist in Lage und Winkel zu der Hubstange des Stellantriebes 86 einstellbar. Des weiteren ist der Stellantrieb 86 in seiner Position über in dem Halteelement 84 vorgesehene Langlöcher ebenso einstellbar. Der Stellantrieb 86 ist derart ausgebildet, daß der Verfahrweg der Sensorhalterung 87 zumindest die Breite der Lauffläche 17 eines Eisenbahnrades umfaßt.

Die Sensorhalterung 87 nimmt beispielsweise durch eine lösbare Rastverbindung zumindest einen Sensor auf. In Abhängigkeit der Prüfaufgabe kann die Sensorhalterung 87 mit der entsprechenden Art und Anzahl Sensoren bestückt werden. Beispielsweise können mehrere Sensoren hintereinander angeordnet und auf den Krümmungsradius des Prüflings angepaßt sein, wobei jeder Sensor reihenweise versetzt zum anderen positioniert ist. Dadurch kann eine Lauffläche 17 durch den Meßbereich der Sensoren vollständig erfaßt werden, so daß nach einer Umdrehung des Prüflings die Lauffläche geprüft ist. Ggf. erfolgt eine weitere Drehung als Kontrollmessung. Die Sensoren sind einzeln im Winkel und Abstand zur Prüffläche einstellbar am Sensorhalter 87 vorgesehen.

Ebenso kann ein Meßsensor und ein Kontrollsensor an einem Sensorhalter vorgesehen sein, so daß mit einer Umdrehung des Prüflings Messung und Kontrolle erfolgen kann.

In Figur 7 nimmt die Sensorhalterung 87 zwei Sensoren auf. Die Sensorhalterung 87 ist darauf eingestellt, den horizontalen Abschnitt 22 des Eisenbahnrades 11 zu prüfen.

In Figur 8 nimmt die Sensorhalterung 87 beispielsweise einen Sensor auf, um den geneigten Bereich 23 der Lauffläche 17 des Eisenbahnrades 11 zu prüfen. Diese Aufteilung weist den Vorteil auf, daß die beiden aneinandergrenzenden Abschnitte 22 und 23 getrennt voneinander geprüft und somit eine Erhöhung der Sicherheit gegeben ist. Alternativ kann vorgesehen sein, daß mittels zwei oder mehreren Sensoren in einer Sensorhalterung 87 beide Abschnitte 22, 23 der Lauffläche 17 geprüft werden. In Abhängigkeit der zu lösenden Aufgabe werden die Sensoren in den Sensorenhalterungen 87 der Sensorträger 53, 54 bestückt.

Die Sensorhalterung 87 wird vorteilhafterweise in einer Arbeitsposition der Sensorträger 53, 54 mit einem Referenz-Eisenbahnrad eingestellt. Der Abstand zur Prüffläche ist je nach Sensortyp und der zu findenden Fehlerklasse angepaßt. Ebenso ist der eingestellte Abstand abhängig von der verwendeten Prüftechnik. Die Sensorhalterung 87 wird derart ausgerichtet, daß die Sensoren senkrecht zur Prüffläche angeordnet sind. In Abhängigkeit des Prüfverfahrens können diese Sensoren auch zur Schrägeinschallung eingestellt werden, beispielsweise mit ± 5° oder auch mehr.

An einem Testrad kann am Radkranz oder der Radscheibe des weiteren ein Magnetelement angebracht sein. Durch die Erkennung des Magnetelementes mittels eines magnetinduktiven Schalters kann bspw. die Position des Rades als Null-Grad-Position festgelegt werden. Durch die rechnerische Koppelung mit einem Inkrementalgeber der Laufrollen kann die Winkelposition des Testrades erkannt und die im Testrad vorgesehen Fehlstellen genau erfaßt werden. Somit dient diese Null-Grad-Positionierung zur Eichung und Einstellung des Systems. Darüber hinaus kann bei jedem Prüfling ein Magnetelement während der Dauer der Prüfung angebracht werden, so daß bei Ermittlung von Fehlstellen eine exakte und einfache Bestimmung ggf. vorliegender Fehlstellen am Prüfling ermöglicht ist.

In Figur 8 ist des weiteren ein Stellantrieb 88 mit einer Sensorhalterung 89 zur Aufnahme von zwei Sensoren vorgesehen. Diese Sensoren werden zur Prüfung der Stirnfläche beziehungsweise des Radkranzes 16 des Prüflings eingesetzt. Während der Durchführung der Prüfung werden die Stellantriebe 86 und 88 entlang der Prüfstrecke verfahren. Dieses kann schrittweise oder kontinuierlich erfolgen.

Alternativ zum Sensorhalter 89 kann ein Sensorhalter vorgesehen sein, der eine Mehrzahl von Sensoren aufnehmen kann, die ebenfalls in einem frei wählbaren, aber auf die Prüftechnik angepaßten Winkel einstellbar sind. Die Sensoren zur Prüfung der Stirnfläche beziehungsweise des Radkranzes sind vorzugsweise versetzt zueinander angeordnet, so daß das dadurch gebildete Prüffeld die Stirnfläche beziehungsweise den Radkranz 16 des Prüflings vollständig abdeckt und eine Raddrehung zur Prüfung genügt. Die Anordnung des Mehrfachsensorträgers in einer Prüfposition ist auch auf unterschiedliche Durchmesser der Prüflinge einstellbar.

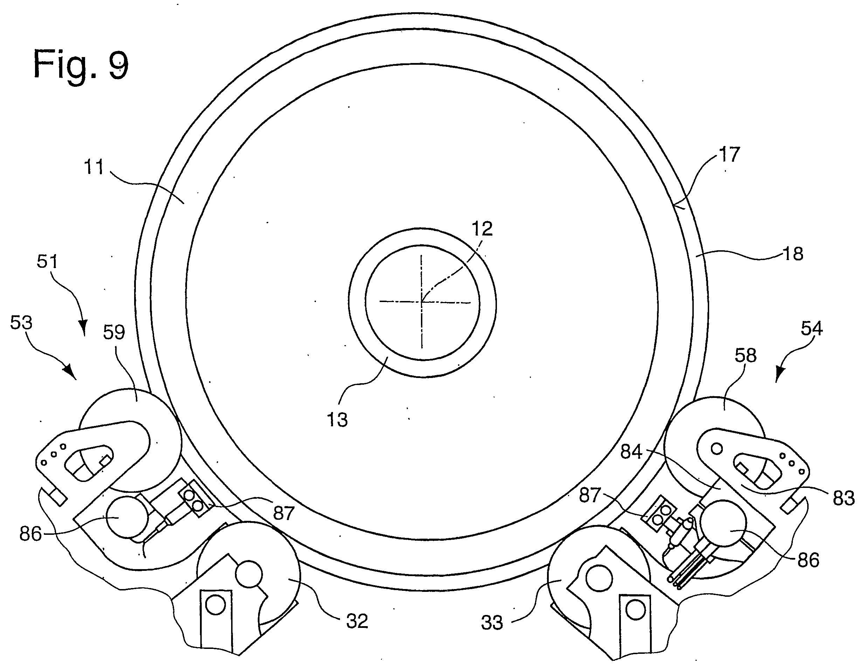

Anhand der Figur 7 wird eine an dem linken und rechten Sensorträger 53, 54 vorgesehene Druckbegrenzereinheit 91 für den Anpreßdruck der Laufrolle 58, 59 an der Lauffläche 17 näher beschrieben. Der Hubstößel eines Antriebselementes 52 greift an einen Bolzen 92 an, welcher an einem Hebelarm 93 um eine Achse 94 schwenkbar angeordnet ist. Zur Überführung der Sensorträger 53, 54 in eine Arbeitsposition wird der Hubstößel nach links bewegt, so daß der Sensorträger 53 gemäß Figur 7 im Uhrzeigersinn nach oben schwenkt. Dem Hebelarm 93 wirkt eine Druckkraft eines Kraftspeichers 96 entgegen. Dieser Kraftspeicher 96 ist beispielsweise als ein Druckfederelement ausgebildet. Sobald die Laufrolle 58 an der Lauffläche 17 des Eisenbahnrades 11 anliegt, arbeitet das Antriebelement 52 gegen den Kraftspeicher 96. Bei Überwinden einer vordefinierten und alternativ auch einstellbaren Kraft wird der Hebelarm 93 um die Achse 94 geschwenkt und eine Fahne 97 taucht in den Meßbereich von Näherungsschaltern 98 ein, wodurch das Antriebselement 52 stillgesetzt wird. Eine derartige Arbeitsposition ist in Figur 9 dargestellt. Des weiteren wird daraus deutlich, daß unmittelbar mit der Anlage der Laufrolle 58, 59 an der Lauffläche 17 des Eisenbahnrades 11 die Sensorenhalterung 87 in einer exakt vorbestimmten Position angeordnet sind. Die Prüfung kann unmittelbar durchgeführt werden. Alternativ kann die Anordnung der schwenkbaren Einrichtung 51 in einer Arbeitsposition durch Antriebsmotoren erfolgen. Die Schwenkbewegung der Einrichtung 51 und die Anpreßkraft der Laufrollen 58, 59 an dem Prüfling kann durch Sensoren oder Tastelemente oder dergl. überwacht und erfaßt werden.

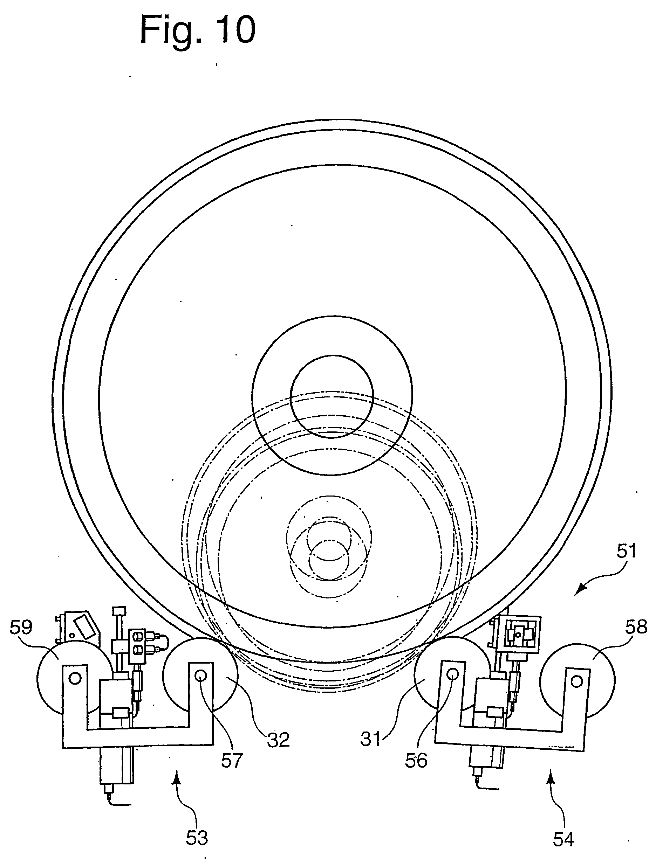

In Figur 10 ist die schwenkbare Einrichtung 51 in einer Ruheposition dargestellt. Die Anordnung von Eisenbahnrädern 11 mit unterschiedlichem Durchmesser auf den Aufnahmerollen 33, 34 ist durch Ineinanderzeichnung der unterschiedlichen Durchmesser dargestellt. Daraus geht hervor, daß in Abhängigkeit des Durchmessers die schwenkbare Einrichtung 51 einen mehr oder weniger großen Schwenkbereich überwindet, um in eine Prüfposition übergeführt zu werden. Die Positionierung der Sensoren unmittelbar zur Lauffläche ist jedoch unabhängig von der Größe der Eisenbahnräder.

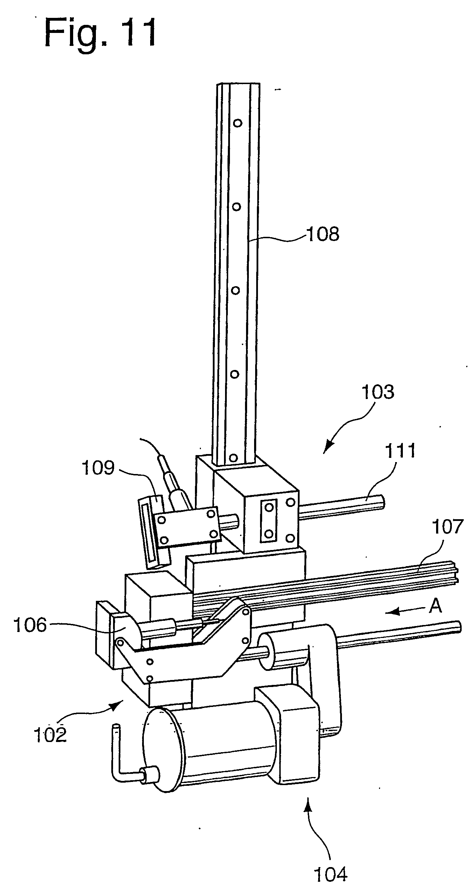

Die Prüfung der Lauffläche 17, der inneren Stirnfläche und des Radkranzes 16 an Eisenbahnrädern 11 und der Lauffläche an Radreifen ist zwingend erforderlich, um die Mindestvoraussetzungen der Sicherheitsanforderungen zu erfüllen. Zusätzlich können weitere Sicherheitsanforderungen gestellt werden, wie beispielsweise die Prüfung der Radscheibe 14 und der Radnabe 13. Hierfür sind - wie Figur 11 zeigt - ein Scheibensensorträger 102 und ein Nabensensorträger 103 vorgesehen, welche fakultativ an dem Rahmen 28 anbringbar sind. Der Scheibensensorträger 102 weist ein Stellelement 104 auf, welches eine Sensorhalterung 106 aufnimmt. Zur Prüfung der Radscheibe 14 wird die Sensorhalterung 106 entlang einer Führung 107 an die Radscheibe 14 gemäß Pfeil A herangefahren. Im Anschluß daran wird die Sensorhalterung 106 gesteuert entlang der weiteren Führung 108 auf und ab bewegt, um die Kontur der Radscheibe 14 zu prüfen. Vorzugsweise wird ein Rundstrahler als Sensor eingesetzt.

Der Nabensensorträger 103 wird in einer vorbestimmten Position auf die Höhe der Radnabe 13 eingestellt, so daß beispielsweise mittels eines Breitstrahlers die Radnabe 13 geprüft wird. Alternativ kann auch mit einem oder mehreren Rundstrahlern geprüft werden. Der Sensorhalter 109 für den Nabensensor ist durch ein Führungselement 111 positionierbar, wobei das Führungselement 111 entlang seiner Längsachse verfahrbar und um seine Längsachse beliebig drehbar ist.

Die Einstellung kann auch geregelt erfolgen. Die Art des Sensors bestimmt die Positionierung und den Einsatz in der Tauchtechnik oder in der Kontakttechnik.

Des weiteren kann an den Sensorträgern 53 und 54 oder an der Führung 108 ein weiterer Sensor zur Erkennung einer Stempelung oder Gravur vorgesehen sein, welche in bestimmten Anwendungen erforderlich sind.

Der Scheibensensorträger 102 kann des weiteren derart ausgebildet sein, daß mehrere Sensorhalter aufgenommen und entlang der Strecke Radnabe bis zum Spurkranz positionierbar ist und ggf. gleichzeitig oder unabhängig einzeln zueinander verfahrbar sind. Dadurch kann beispielsweise eine Anordnung von mehreren Sensoren entlang des Radius der Scheibe fest vorgesehen werden, so daß nach einer Umdrehung die gesamte Scheibenfläche geprüft ist. Alternativ kann vorgesehen sein, die Scheibensensoren gestaffelt während der Prüfung radial einwärts oder auswärts verfahren werden, so daß ebenfalls die gesamte Fläche der Scheibe überprüft werden kann.

Des weiteren kann an den Sensorträgern 53 und 54 oder alternativ zur Prüfung der Radscheibe ein Scheibensensorträger vorgesehen sein, welcher einen dreieckförmigen Bereich aufspannt, in welchem die Sensorhalter radial ein- und auswärts durch zumindest einen Antrieb verfahrbar sind.

Dadurch können unterschiedliche Positionen von bspw. 6 Sensoren eingestellt werden. Diese Sensoren können auch durch einen Mitnehmer miteinander gekoppelt werden, so daß ein einmal eingestellter Abstand der Sensoren zueinander erhalten bleibt und durch einen Antrieb mehrere Sensoren gleichmäßig verfahrbar sind.

Die Sensorhalter ermöglichen eine senkrechte oder winklige Lage zur Prüffläche. Dadurch können auch unterschiedliche Einschallwinkel bei einer Ultraschallmessung eingestellt werden.

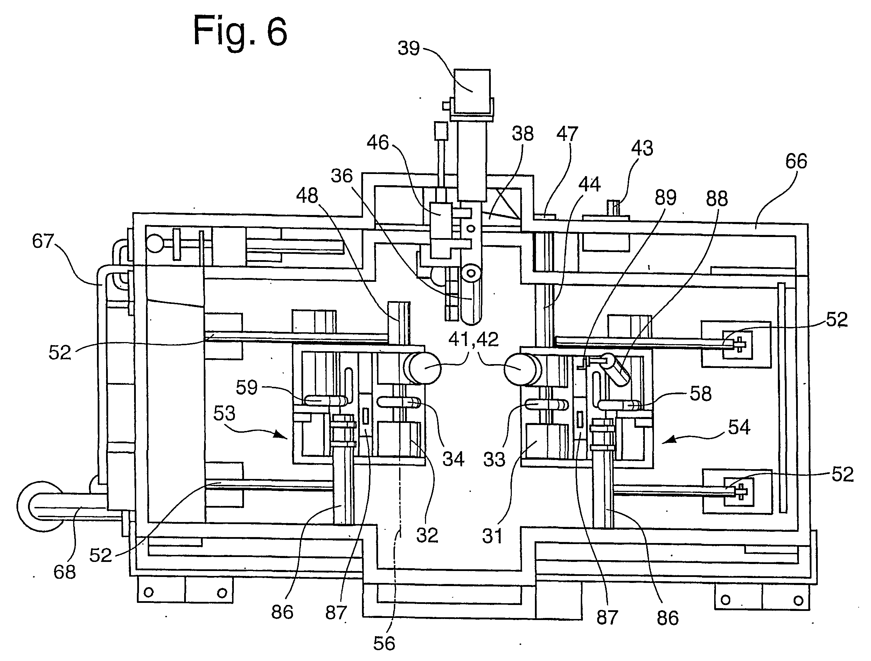

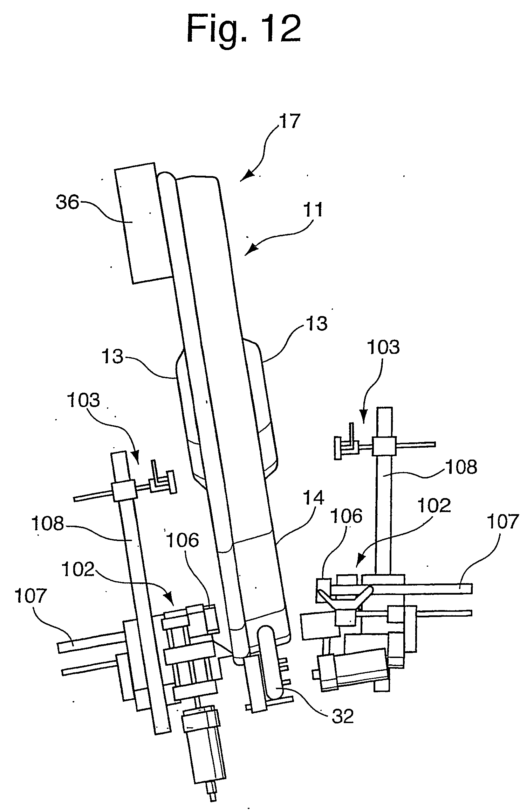

Der Scheibensensorträger 102 und Nabensensorträger 103 wird gemäß Figur 12 in einer vorbestimmten Position am Rahmen 28 befestigt. Zum Be- und Entladen der Vorrichtung 26 wird der gemäß Figur 12 rechte Scheibensensorträger und Nabensensorträger 102, 103 nach rechts geklappt, so daß eine gute Zugänglichkeit für die Greifvorrichtung zum Einlegen und zur Entnahme des Eisenbahnrades 11 gegeben ist. Vorzugsweise ist hierfür, wie in Figur 6 dargestellt, eine Aussparung vorgesehen. Der linke Scheiben- und Nabensensorträger 102, 103 bleibt in einer fixierten Position. Dieser kann aber auch wegklappbar ausgelegt sein.

Zur Volumenprüfung der Räder und Radreifen werden Ultraschallprüfköpfe mit beispielsweise einer Frequenz von 4 bis 5 Megahertz eingesetzt. Diese Ultraschallprüfköpfe sind für ein Prüfsystem für mehrere Kanäle, beispielsweise 16 Kanäle ausgelegt, so daß eine Datenerfassung und Datenverarbeitung ermöglicht ist. Es können auch andere Sensoren, wie beispielsweise Wirbelstromsensoren oder magnetinduktive Sensoren vorgesehen sein. Des weiteren können anwendungsspezifisch auch Breitstrahlprüfköpfe eingesetzt werden. Ebenso ist der Einsatz von Tastern möglich. Der Begriff Sensor steht stellvertretend für ein Meßmittel zum Messen, Prüfen, Erfassen von Informationen und wird an den Anwendungsfall angepaßt und dafür ausgewählt.

## Patentansprüche

1. Verfahren zur zerstörungsfreien Prüfung oder zur Erfassung von Meßdaten von scheiben- oder ringförmigen Prüflingen (11), insbesondere Radreifen oder Räder von Schienenfahrzeugen, bei denen der Prüfling (11) auf zwei zueinander beabstandete Aufnahmerollen (33, 34) aufgesetzt wird, die jeweils an einem Lager (31, 32) drehbar aufgenommen sind, **dadurch gekennzeichnet dass** der Prüfling (11) durch eine zu den Aufnahmerollen (33, 34) beabstandete Stützrolle (36) in einer Schräglage in der Prüfposition gehalten wird, wobei die Stützrolle (36) zumindest in einem geringen Winkel gegenüber einer Vertikalen geneigt angeordnet ist, und weiterhin **dadurch gekennzeichnet, dass** eine schwenkbare Einrichtung (51) um eine Schwenkachse (56) gedreht wird, dass eine an der schwenkbaren Einrichtung (51) angeordnete Laufrolle (58, 59) zur Anlage an einer Prüffläche des Prüflings (11) übergeführt wird und zumindest ein an der schwenkbaren Einrichtung (51) angeordneter Sensor in einer Prüflage positioniert wird und dass der zumindest eine Sensor entlang einer Prüfstrecke verfahren wird.

2. Verfahren nach Anspruch 1, **dadurch gekennzeichnet, dass** der Prüfling durch wenigstens eine angetriebene Aufnahmerolle (33, 34) in Drehung versetzt wird und vorzugsweise die Drehung der angetriebenen Aufnahmerolle (33, 34) mit der Drehung einer von dem Prüfling getriebenen Aufnahmerolle (34, 33) oder Laufrolle (58, 59) durch Inkrementalgeber aufgenommen und miteinander verglichen werden.

3. Verfahren nach einem der vorhergehenden Ansprüche, **dadurch gekennzeichnet, dass** zur Prüfung von zumindest einer Lauffläche (17) oder eines Radkranzes (16) beziehungsweise einer Stirnfläche des Prüflings zumindest ein Sensor vorgesehen ist, der nach jeder Umdrehung des Prüflings um die Spurbreite der Prüfspur entlang der Prüffläche versetzt wird.

4. Verfahren nach einem der Ansprüche 1 oder 2, **dadurch gekennzeichnet, dass** zur Prüfung zumindest der Lauffläche (17) oder des Radkranzes (16) beziehungsweise einer Stirnfläche des Prüflings zumindest ein Sensor quer zur Lauffläche (17) oder des Radkranzes (16) kontinuierlich oder quasi kontinuierlich verfahren wird und in Abhängigkeit des Durchmessers des Prüflings und der Rotationsgeschwindigkeit des Prüflings die Verfahrgeschwindigkeit des zumindest einen Sensors bestimmt wird.

5. Verfahren nach einem der vorhergehenden Ansprüche, **dadurch gekennzeichnet, dass** die Lauffläche (17) und der Radkranz (16) beziehungsweise die Stirnfläche des Prüflings durch zumindest jeweils zwei an einem Sensorträger (54) angeordnete Sensoren gleichzeitig geprüft wird und vorzugsweise gleichzeitig zur Prüfung von zumindest einer Lauffläche (17) des Prüflings eine Radscheibe (14) und eine Radnabe (13) durch einen Scheibensensorträger (102) und Nabensensorträger (103) in einem gemeinsamen Prüfzyklus geprüft werden.

6. Verfahren nach einem der vorhergehenden Ansprüche, **dadurch gekennzeichnet, dass** die zerstörungsfreie Prüfung von Radreifen und Rädern von Schienenfahrzeugen mit Ultraschall in Tauchtechnik durchgeführt wird.

7. Vorrichtung, insbesondere zur Durchführung des Verfahrens nach Anspruch 1, zur zerstörungsfreien Prüfung oder Erfassung von Meßdaten eines scheiben- oder ringförmigen Prüflings, insbesondere Radreifen und Räder für Schienenfahrzeuge, mit einem Grundgestell (27), mit einem ersten und zweiten Lager (31, 32) zur drehbaren Aufnahme von zumindest jeweils einer Aufnahmerolle (33, 34), auf denen ein Prüfling anordenbar ist, **gekennzeichnet durch** einen an dem Grundgestell (27) vorgesehenen Tragarm (39) mit einer Stützrolle (36) für eine weitere Positionierung des Prüflings in einer Schräglage in der Prüfposition, wobei die Stützrolle (36) zumindest in einem geringen Winkel gegenüber einer Vertikalen geneigt angeordnet ist, und weiterhin **dadurch gekennzeichnet, dass** eine schwenkbare Einrichtung (51) vorgesehen ist, welche zumindest eine Laufrolle (58, 59) aufnimmt und dass bei der Anlage der zumindest einen Laufrolle (58, 59) an dem Prüfling zumindest ein an der schwenkbaren Einrichtung (51) angeordneter Sensor in einer Prüfposition zur Prüffläche am Prüfling vorgesehen ist.

8. Vorrichtung nach Anspruch 7, **dadurch gekennzeichnet, dass** eine Drehachse (56) der schwenkbaren Einrichtung (51) in der Drehachse der Aufnahmerolle (33, 34) liegt und vorzugsweise zumindest eine Aufnahmerolle (33, 34) angetrieben ist.

9. Vorrichtung nach Anspruch 7 oder 8, **dadurch gekennzeichnet, dass** die schwenkbare Einrichtung (51) wenigstens ein Antriebselement (52) zur schwenkbaren Anordnung aufweist, welches an dem Grundgestell (27) angreift.

10. Vorrichtung nach einem der Ansprüche 7 bis 9, **dadurch gekennzeichnet, dass** die schwenkbare Einrichtung (51) zumindest einen ersten Sensor aufweist, der in einem mittleren Bereich zwischen der Drehachse der Laufrolle (58, 59) und der Drehachse (56) der Aufnahmerolle (33, 34) vorgesehen ist und vorzugsweise auf einen Tastabstand bei Anlage der Laufrolle (58, 59) an dem Prüfling einstellbar ist.

11. Vorrichtung nach einem der Ansprüche 7 bis 10, **dadurch gekennzeichnet, dass** zumindest ein erster Sensor mit einem an der schwenkbaren Einrichtung (51) angeordneten Stellantrieb (86) entlang der Prüfstrecke verfahrbar ist.

12. Vorrichtung nach Anspruch 11, **dadurch gekennzeichnet, dass** der erste Sensor zur Prüfung der Lauffläche (17) des Prüflings vorgesehen ist.

13. Vorrichtung nach einem der Ansprüche 7 bis 10, **dadurch gekennzeichnet, dass** an der schwenkbaren Einrichtung (51) zumindest ein weiterer Sensor vorgesehen ist, der in einer von dem zumindest einen ersten Sensor abweichenden Prüflage angeordnet ist, insbesondere über einen separaten an der schwenkbaren Einrichtung (51) angeordneten Stellantrieb (88) verfahrbar ist und vorzugsweise der zweite Sensor zumindest zur Prüfung der Stirnfläche beziehungsweise des Radkranzes des Prüflings vorgesehen ist.

14. Vorrichtung nach Anspruch 7, **dadurch gekennzeichnet, dass** die schwenkbare Einrichtung (51) einen linken und rechten Sensorträger (53, 54) umfaßt, die einen annähernd U-förmigen Rahmen aufweisen und die zumindest eine Laufrolle (58, 59) in einer Ebene der Aufnahmerolle (33, 34) positioniert.

15. Vorrichtung nach Anspruch 7, **dadurch gekennzeichnet, dass** zwischen dem Antriebselement (52) und der schwenkbaren Einrichtung (51) eine Druckbegrenzereinheit (91) vorgesehen ist, welche einen vorzugsweise einstellbaren Anpreßdruck der Laufrolle (58, 59) an dem Prüfling überwacht und vorzugsweise die zumindest eine Druckbegrenzereinheit (91) an dem rechten und linken Sensorträger (53, 54) vorgesehen ist und einen an einem Schenkel der Sensorträger (53, 54) schwenkbar angeordneten Hebelarm (93) aufweist, welcher im Bereich eines Angriffspunktes (92) des Antriebselementes (52) gegen einen Kraftspeicher (96) arbeitet.

16. Vorrichtung nach Anspruch 13, **dadurch gekennzeichnet, dass** bei Erreichen eines einstellbaren Anpressdruckes der Hebelarm (93) gegen den Kraftspeicher (96) auslenkbar ist und bei Überschreiten einer voreingestellten Kraft zumindest ein Sensor (98) das Antriebselement (52) stillsetzt.

17. Vorrichtung nach Anspruch 7, **dadurch gekennzeichnet, dass** am oberen Ende des Tragarmes (39) ein Schwenkarm (38) vorgesehen ist, durch den die Stützrolle (36) aus einer Arbeitsposition in eine Be- und Entladeposition für den Prüfling schwenkbar ist, wobei vorzugsweise die Stützrolle (36) über ein Hubelement (46) höhenverstellbar am Schwenkarm (38) angeordnet ist und die Stützrolle (36) zumindest außerhalb der Radnabe (13) zumindest abschnittsweise an einer Seitenfläche des Prüflings angreift.

18. Vorrichtung nach Anspruch 17, **dadurch gekennzeichnet, dass** die Rotationsachse (37) der Stützrolle (36) senkrecht zur Rotationsachse (12) des Prüflings vorgesehen ist.

19. Vorrichtung nach Anspruch 7, **dadurch gekennzeichnet, dass** die Drehachse (56) der Aufnahmerollen (33, 34) und die Rotationsachse (37) der Stützrolle (36) rechtwinklig zueinander angeordnet sind und der Rahmen (28) des Gestells (27) gegenüber der Horizontalen geneigt ist.

20. Vorrichtung nach Anspruch 7, **dadurch gekennzeichnet, dass** auf dem Grundgestell ein Becken (66) vorgesehen ist, welches zur Prüfung mit einem Koppelmedium Zu- und Abläufe (67, 68) aufweist und zumindest die Aufnahmerolle (33, 34) und die schwenkbare Einrichtung (51) umgibt.

## Claims

1. Method for non-destructive testing of, or for acquiring measurement data from discoidal or annular test objects (11), in particular wheel tyres or wheels of rail-bound vehicles in the case of which the test object (11) is mounted on two mutually spaced apart holding rollers (33, 34) which are each held rotatably on a bearing (31, 32), **characterized in that** the test object (11) is held in an oblique position in the test position by a support roller (36) spaced apart from the holding rollers (33, 34), the support roller (36) being arranged inclined to the vertical at at least a slight angle, and **characterized**, moreover, **in that** a pivotable device (51) is rotated about a pivot axis (56), **in that** a guide roller (58, 59) arranged on the pivotable device (51) is transferred so as to bear against a test surface of the test object (11), and at least one sensor arranged on the pivotable device (51) is positioned in a test position, and **in that** the at least one sensor is moved along a test path.

2. Method according to Claim 1, **characterized in that** the test object is set rotating by at least one driven holding roller (33, 34), and preferably the rotation of the driven holding roller (33, 34) and the rotation of a holding roller (34, 33), driven by the test object, or guide roller (58, 59) are picked up by an incremental transmitter and compared with one another.

3. Method according to either of the preceding claims, **characterized in that** provided for the purpose of testing at least one running surface (17) or one wheel rim (16) or an end face of the test object is at least one sensor which is displaced along the test surface by the track width of the test track after each revolution of the test object.

4. Method according to either of Claims 1 and 2, **characterized in that** in order to test at least the running surface (17) or the wheel rim (16) or an end face of the test object, at least one sensor is moved continuously or quasi-continuously transverse to the running surface (17) or the wheel rim (16), and the speed of movement of the at least one sensor is determined as a function of the diameter of the test object and of the rate of rotation of the test object.

5. Method according to one of the preceding claims, **characterized in that** the running surface (17) and the wheel rim (16) or the end face of the test object are tested simultaneously by at least in each case two sensors arranged on a sensor support (54) and, preferably at the same time as the testing of at least one running surface (17) of the test object, a wheel disc (14) and a wheel hub (13) are tested in a common test cycle by a disc sensor support (102) and hub sensor support (103).

6. Method according to one of the preceding claims, **characterized in that** the non-destructive testing of wheel tyres and wheels of rail-bound vehicles is carried out with ultrasound using immersion technology.

7. Device, in particular for carrying out the method according to Claim 1, for non-destructive testing of, or for acquiring measurement data from a discoidal or annular test object, in particular wheel tyres and wheels of rail-bound vehicles, having a basic framework (27) with a first and second bearing (31, 32) for rotatably holding at least in each case one holding roller (33, 34) on which a test object can be arranged, **characterized by** a support arm (39) which is provided on the basic framework (27) and has a support roller (36) for a further positioning of the test object in an oblique position in the test position, the support roller (36) being arranged inclined to the vertical at at least a slight angle, and **characterized**, moreover, in that a pivotable device (51) is provided which holds at least one guide roller (58, 59), and in that when the at least one guide roller (58, 59) bears against the test object at least one sensor arranged on the pivotable device (51) is provided in a test position in relation to the test surface on the test object.

8. Device according to Claim 7, **characterized in that** an axis of rotation (56) of the pivotable device (51) lies on the axis of rotation of the holding roller (33, 34), and preferably at least one holding roller (33, 34) is driven.

9. Device according to Claim 7 or 8, **characterized in that** the pivotable device (51) has at least one drive element (52) for pivotable arrangement which acts on the basic framework (27).

10. Device according to one of Claims 7 to 9, **characterized in that** the pivotable device (51) has at least one first sensor which is provided in a middle region between the axis of rotation of the guide roller (58, 59) and the axis of rotation (56) of the holding roller (33, 34), and can preferably be set to a sensing distance when the guide roller (58, 59) bears against the test object.

11. Device according to one of Claims 7 to 10, **characterized in that** at least one first sensor can be moved along the test path with the aid of an actuator (86) arranged on the pivotable device (51).

12. Device according to Claim 11, **characterized in that** the first sensor is provided for testing the running surface (17) of the test object.

13. Device according to one of Claims 7 to 10, **characterized in that** provided on the pivotable device (51) is at least one further sensor, which is arranged in a test position deviating from the at least one first sensor, in particular being able to be moved via a separate actuator (88) arranged on the pivotable device (51), and the second sensor is preferably provided at least for testing the end face or the wheel rim of the test object.

14. Device according to Claim 7, **characterized in that** the pivotable device (51) comprises a left-hand and right-hand sensor support (53, 54), which have an approximately U-shaped frame, and positions the at least one guide roller (58, 59) in a plane of the holding roller (33, 34).

15. Device according to Claim 7, **characterized in that** provided between the drive element (52) and the pivotable device (51) is a pressure-limiting unit (91) which monitors a preferably settable contact pressure of the guide roller (58, 59) on the test object, and the at least one pressure-limiting unit (91) is preferably provided on the right-hand and left-hand sensor support (53, 54) and has a lever arm (93) which is pivotably arranged on a limb of the sensor support (53, 54) and works against an energy store (96) in the region of a point (92) of action of the drive element (52).

16. Device according to Claim 13, **characterized in that** when a settable contact pressure is reached the lever arm (93) can be deflected towards the energy store (96), and at least one sensor (98) shuts down the drive element (52) when a preset force is exceeded.

17. Device according to Claim 7, **characterized in that** provided at the upper end of the support arm (39) is a pivot arm (38) by means of which the support roller (36) can be pivoted from a working position into a position for loading and unloading the test object, the support roller (36) preferably being arranged in a height-adjustable fashion on the pivot arm (38) via a lifting element (46), and the support roller (36) at least partially acting on a lateral surface of the test object, at least outside the wheel hub (13).

18. Device according to Claim 17, **characterized in that** the axis of rotation (37) of the support roller (36) is provided perpendicular to the axis of rotation (12) of the test object.

19. Device according to Claim 7, **characterized in that** the axis of rotation (56) of the holding rollers (33, 34), and the axis of rotation (37) of the support roller (36) are arranged at right angles to one another, and the frame (28) of the framework (27) is inclined to the horizontal.

20. Device according to Claim 7, **characterized in that** provided on the basic framework is a reservoir (66) which has inlets and outlets (67, 68) for testing with a coupling medium, and surrounds at least the holding roller (33, 34) and the pivotable device (51).

## Revendications

1. Procédé de contrôle non destructif ou d'acquisition de valeurs mesurées sur des échantillons (11) discoïdaux ou annulaires, notamment des pneumatiques ou des roues de véhicules ferroviaires, avec lequel l'échantillon (11) est posé sur deux rouleaux d'accueil (33, 34) espacés l'un de l'autre, lesquels sont respectivement logés dans un palier (31, 32) de manière à pouvoir tourner, **caractérisé en ce que** l'échantillon (11) est maintenu oblique dans une position de contrôle par un rouleau support (36) espacé des rouleaux d'accueil (33, 34), le rouleau support (36) étant disposé incliné au moins selon un petit angle par rapport à une verticale, et aussi **caractérisé en ce qu'**un dispositif pivotant (51) est pivoté autour d'un axe de pivotement (56), qu'un galet de roulement (58, 59) monté sur le dispositif pivotant (51) est transféré pour être appliqué sur une surface à contrôler de l'échantillon (11) et au moins un capteur monté sur le dispositif pivotant (51) est amené dans une position de contrôle et que l'au moins un capteur est déplacé le long d'un trajet de contrôle.

2. Procédé selon la revendication 1, **caractérisé en ce que** l'échantillon est mis en rotation par au moins un rouleau d'accueil (33, 34) entraîné et la rotation du rouleau d'accueil (33, 34) entraîné ainsi que la rotation d'un rouleau d'accueil (33, 34) entraîné par l'échantillon ou du galet de roulement (58, 59) sont de préférence enregistrées par un codeur incrémental et comparées entre elles.

3. Procédé selon l'une des revendications précédentes, **caractérisé en ce qu'**au moins un capteur est prévu pour contrôler au moins une surface de roulement (17) ou une jante (16) ou encore une surface frontale de l'échantillon, capteur qui, après chaque tour de l'échantillon, est décalé de la largeur de la piste de contrôle le long de la surface de contrôle.

4. Procédé selon l'une des revendications 1 ou 2, **caractérisé en ce que** pour contrôler au moins la surface de roulement (17) ou la jante (16) ou encore une surface frontale de l'échantillon, au moins un capteur est déplacé continuellement ou quasi-continuellement dans le sens transversal par rapport à la surface de roulement (17) ou à la jante (16) et la vitesse de déplacement de l'au moins un capteur est déterminée en fonction du diamètre de l'échantillon et de la vitesse de rotation de l'échantillon.

5. Procédé selon l'une des revendications précédentes, **caractérisé en ce que** la surface de roulement (17) et la jante (16) ou encore la surface frontale de l'échantillon sont contrôlées simultanément à chaque fois par au moins deux capteurs montés sur un support de capteur (54) et un disque de roue (14) et un moyeu de roue (13) sont contrôlés de préférence simultanément au contrôle d'au moins une surface de roulement (17) de l'échantillon dans un cycle de contrôle commun par un support de capteur de disque (102) et un support de capteur de moyeu (103).

6. Procédé selon l'une des revendications précédentes, **caractérisé en ce que** le contrôle non destructif de pneumatiques et de roues de véhicules ferroviaires est réalisé avec des ultrasons en technique par immersion.

7. Dispositif, notamment pour mettre en oeuvre le procédé selon la revendication 1, de contrôle non destructif ou d'acquisition de valeurs mesurées sur un échantillon discoïdal ou annulaire, notamment des pneumatiques et des roues de véhicules ferroviaires, comprenant un bâti (27) avec un premier et un deuxième palier (31, 32) destinés à recevoir au moins à chaque fois un rouleau d'accueil (33, 34) de manière à ce qu'il puisse tourner et sur lequel peut être posé un échantillon, **caractérisé par** un bras porteur (39) prévu sur le bâti (27), comprenant un rouleau support (36) pour un positionnement supplémentaire oblique de l'échantillon dans une position de contrôle, le rouleau support (36) étant disposé incliné au moins selon un petit angle par rapport à une verticale, et aussi **caractérisé en ce qu'**il est prévu un dispositif pivotant (51) recevant au moins un galet de roulement (58, 59) et que lors de l'application de l'au moins un galet de roulement (58, 59) sur l'échantillon, au moins un capteur monté sur le dispositif pivotant (51) est prévu dans une position de contrôle vers la surface à contrôler sur l'échantillon.

8. Dispositif selon la revendication 7, **caractérisé en ce qu'**un axe de rotation (56) du dispositif pivotant (51) se trouve dans l'axe de rotation du rouleau d'accueil (33, 34) et de préférence au moins un rouleau d'accueil (33, 34) est entraîné.

9. Dispositif selon la revendication 7 ou 8, **caractérisé en ce que** le dispositif pivotant (51) présente au moins un élément d'entraînement (52) en vue de son montage pivotant, lequel vient en prise sur le bâti (27).

10. Dispositif selon l'une des revendications 7 à 9, **caractérisé en ce que** le dispositif pivotant (51) présente au moins un premier capteur qui est prévu dans une zone centrale entre l'axe de rotation du galet de roulement (58, 59) et l'axe de rotation (56) du rouleau d'accueil (33, 34) et qui est de préférence réglable à une distance de palpage lors de l'application du galet de roulement (58, 59) sur l'échantillon.

11. Dispositif selon l'une des revendications 7 à 10, **caractérisé en ce qu'**au moins un premier capteur peut se déplacer le long du trajet de contrôle avec un mécanisme de positionnement (86) monté sur le dispositif pivotant (51).

12. Dispositif selon la revendication 11, **caractérisé en ce que** le premier capteur est prévu pour contrôler la surface de roulement (17) de l'échantillon.

13. Dispositif selon l'une des revendications 7 à 10, **caractérisé en ce qu'**au moins un capteur supplémentaire est prévu sur le dispositif pivotant (51), lequel est disposé dans une position de contrôle différente de celle de l'au moins un premier capteur, et peut notamment être déplacé par le biais d'un mécanisme de positionnement (88) monté séparément sur le dispositif pivotant (51) et le deuxième capteur est de préférence prévu au moins pour contrôler la surface frontale ou la jante de l'échantillon.

14. Dispositif selon la revendication 7, **caractérisé en ce que** le dispositif pivotant (51) comprend un support de capteur gauche et droit (53, 54), lesquels présentent un cadre approximativement en forme de U et **en ce qu'**au moins un galet de roulement (58, 59) est positionné dans un plan du rouleau d'accueil (33, 34).

15. Dispositif selon la revendication 7, **caractérisé en ce qu'**entre l'élément d'entraînement (52) et le dispositif pivotant (51) est prévue une unité de limitation de la pression (91) qui surveille une pression d'application de préférence réglable du galet de roulement (58, 59) sur l'échantillon et l'au moins une unité de limitation de la pression (91) est de préférence prévue sur le support de capteur gauche et droit (53, 54) et présente un bras de levier (93) monté de manière à pouvoir pivoter sur une branche du support de capteur (53, 54), lequel agit contre la force d'un ressort (96) dans la zone d'un point d'attaque (92) de l'élément d'entraînement (52).

16. Dispositif selon la revendication 13, **caractérisé en ce que** lorsqu'une pression d'application réglable est atteinte, le bras de levier (93) peut être déplié contre la force du ressort (96) et **en ce qu'**en cas de dépassement d'une force préréglée au moins un capteur (98) immobilise l'élément d'entraînement (52).

17. Dispositif selon la revendication 7, **caractérisé en ce qu'**à l'extrémité supérieure du bras porteur (39) est prévu un bras pivotant (38) par lequel le rouleau support (36) peut être amené d'une position de travail en une position de chargement et de déchargement de l'échantillon, le rouleau support (36) étant de préférence monté sur le bras pivotant (38) par le biais d'un élément de levage (46) de manière à pouvoir être réglé en hauteur et le rouleau support (36) vient en prise au moins à l'extérieur du moyeu de roue (13) au point par sections sur une surface latérale de l'échantillon.

18. Dispositif selon la revendication 17, **caractérisé en ce que** l'axe de rotation (37) du rouleau support (36) est prévu perpendiculaire à l'axe de rotation (12) de l'échantillon.

19. Dispositif selon la revendication 7, **caractérisé en ce que** l'axe de rotation (56) des rouleaux d'accueil (33, 34) et l'axe de rotation (37) du rouleau support (36) sont montés perpendiculairement l'un à l'autre et le cadre (28) du bâti (27) est incliné par rapport à l'horizontale.

20. Dispositif selon la revendication 7, **caractérisé en ce qu'**un bassin (66) est prévu dans le bâti, lequel présente des arrivées et des écoulements (67, 68) pour le contrôle avec un fluide de couplage et entoure au moins le rouleau d'accueil (33, 34) et le dispositif pivotant (51).
